# EUROPEAN PATENT SPECIFICATION

(11) **EP 1 250 819 B1**
(45) Date of publication and mention of the grant of the patent: **24.09.2008**
(21) Application number: 01902446.2
(22) Date of filing: 22.01.2001
(51) Int. Cl.: H04Q 3/545

(54) **METHOD FOR HANDLING TELECOMMUNICATION TRAFFIC IN AN INTELLIGENT NETWORK**
VERFAHREN ZUR BEARBEITUNG VON TELEKOMMUNIKATIONSVERKEHR IN EINEM INTELLIGENTEN NETZ
PROCEDE DE GESTION DU TRAFIC DES TELECOMMUNICATIONS DANS UN RESEAU INTELLIGENT

(30) Priority: 24.01.2000 FI 20000136
(43) Date of publication of application: 23.10.2002
(73) Proprietor: Elisa Oyj, 00520 Helsinki (FI)
(72) Inventor: FILS, Henry, FIN-00200 Helsinki (FI)
(74) Representative: Lipsanen, Jari Seppo Einari
(86) International application number: PCT/FI2001/000054
(87) International publication number: WO 2001/056306

(56) References cited:
- EP-A1- 1 018 844
- WO-A1-96/13949
- US-A- 6 016 337

## Description

The present invention relates to a method according to the preamble of Claim 1 for processing intelligent-network traffic provided with terminating traffic triggering conditions.

In operations according to the INAP standard, which is in force in many countries, so-called terminating traffic triggering conditions (e.g., TDP12 = trigger when call is coming) can be set for subscriber, hunting group, and direct dialling connections. This patent specification presents a description of the problem and a model for a solution, using as an example terminating traffic triggering that takes place when a call arrives (TDP 12).

When a call comes to a destination connection (the B-subscriber), and the triggering condition is fulfilled, the switching centre (SSP) does not connect the incoming call to the connection, but instead sends an intelligent-network query to the control point (SCP) of the intelligent network. The intelligent-network control point draws the necessary conclusions according to the service in use and then either directs the SSP to connect the call to the destination connection or to another connection, or else completely prevents it being connected.

The method according to the standard is workable, if it is wished to implement services in which the incoming call in question is either connected to the addressed B-connection and then (for example, if the connection does not respond) possibly elsewhere, or if the connection is made immediately elsewhere (for instance, to a mobile telephone) but not at all to the B-connection, or if the call is not connected anywhere.

A drawback in the state of the art is that operation according to the standard in no way permits an initial attempt to connect the call to a connection other than the connection making the intelligent-network query, and only after this connection attempt/s to connect it to the connection that has initiated the trigger.

This is due to the fact that, when a call is connected to the connection initiating the trigger, the standard demands the use of a CONTINUE operation, to prevent the switching centre (SSP) initiating a new trigger. According to the same standard, the CONTINUE operation can only be used as the initial response controlling the connection of a call by the centre.

According to the standard, CONNECT operations must be used when connecting to connections other than the triggering connection, after which the CONTINUE operation can no longer be used.

If the CONNECT operation were to be used to make a connection attempt to the connection that originally initiated the trigger, a new trigger would be initiated, resulting in an 'endless loop', as each new connection to the connection that initiated the trigger would result in a new CONNECT operation, which would in turn initiate new trigger, which would result in a new series of CONNECT operations that would attempt to contact first other connections and finally the connection that had caused the CONNECT operation, thus once again initiating a new trigger. The chain of triggers would continue endlessly, making it impossible to connect the call to the connection initiating the trigger.

The need to 'initially connect elsewhere' that has been referred to, arises, for example, in so-called 'contactability chain' services. In these, the desired mode of operation is often that, if the triggering connection is a land-line connection, a connection is initially made to the mobile telephone of the owner of the land-line connection, and only if the mobile telephone does not respond, or is in a shadow area, is the call connected to the land-line connection that has initiated the trigger.

The invention is intended to eliminate the defects of the state of the art disclosed above and for this purpose create an entirely new type of method for processing intelligent-network traffic provided with terminating traffic triggering conditions.

The invention is based on entering the number of triggering times in a field according to the standard in the signalling system and using the number information to prevent an endless loop in the call routing.

More specifically, the method according to the invention is characterized by what is stated in the characterizing portion of Claim 1.

Considerable advantages are gained with the aid of the invention.

While conforming to the present signalling standard, it is possible to implement the operation required in contactability-chain services and in other similar services, in which a call is initially routed elsewhere than to the connection that initiated the trigger, even though the methods specified in the standard do not support this.

The use of the method of the Claim eliminates any need either to revise the signalling standard (new signalling standard), or to alter the operation of all the operator's SSP switching centres and SCP control centres, in order to achieve the operation of section 1. The use of the method reduces costs significantly.

In the following, the invention is examined with the aid of examples and with reference to the accompanying drawings.

Figure 1 shows a block diagram of one method according to the invention.

Figure 2 shows a flow chart of the method according to the invention.

The method disclosed here is intended to make good the deficiency caused by the standard and to permit the calls to be connected in a desired sequence, irrespectively of which one of the connections being contacted initiated the trigger to the SCP.

In the case used as an example of the method, the following takes place according to the invention:

A call arrives at a land-line connection, for which the terminating traffic triggering condition 'make an intelligent-network query when a call arrives' (TDP12) has been set, the call initiates the trigger, after which an attempt is made to contact two separate mobile telephones, and only after this, if neither of them responds, is the call connected to the land-line connection that originally initiated the trigger, and which is referred to hereinafter as the 'destination connection'.

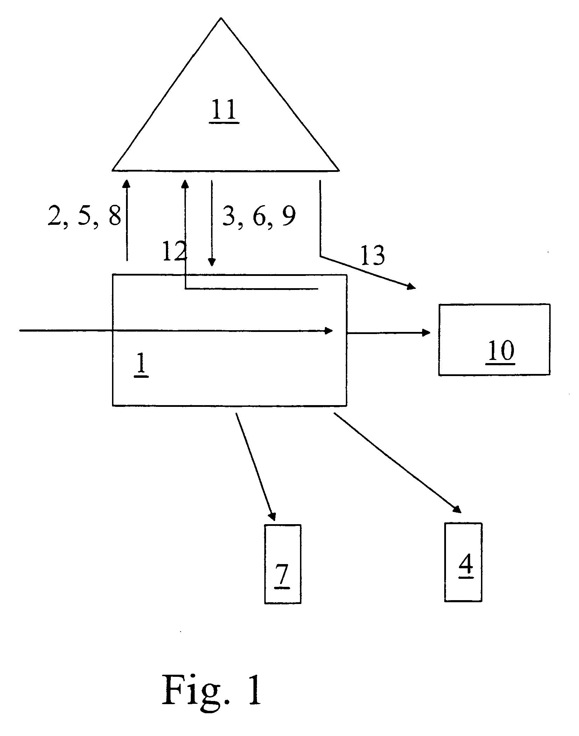

In the following, the method is described with the aid of the figures:
According to Figure 1, when a call 1 arrives at a destination connection 10 (for example, a land-line connection) with a terminating traffic triggering condition (TDP12), this causes a trigger 2 to the control point (SCP) of the intelligent network. The SCP 11 checks, according to the given conditions, whether this is the service's initiating (first) trigger, or whether an attempt has been made to contact the person through all the other connections, so that the (second) trigger now caused is due to the fact that the SCP has, after the other contact attempts, used the CONNECT operation to command the centre (SSP) to connect to the connection, i.e. destination connection 10, that originally initiated the trigger.

Any parameter setting whatever (INAP and ISUP) that is transmittable in signalling can be used to indicate whether the trigger is the first or second. The preferred manner is to use in signalling the parameter values reserved for the network operator's own use (in this example, the value used is 'A-subscriber class (= type) is PBX3 (direct dialling type 3)'.

The SCP 11 detects that this is a first trigger (the A-subscriber class is not PBX3), enters in its register the destination connection number as well as information on the A-subscriber's number and on any call transferers' numbers (these latter in cases in which the call comes to the destination connection through a call transfer), checks whether the call is being connected according to the control of the contactability chain to a connection other than the destination connection, then uses the CONNECT operation to command 3 the SSP to connect to the mobile telephone 4.

If, in response to the received trigger, the call was being connected, according to the control of the contactability chain, first of all to the destination connection 10, the SCP 11 would have given the SSP the CONTINUE command, in which case the connection would have been made directly to the destination connection 10. This case is not examined in detail in the patent specification, as in that case the operation of the method (also in services similar to a contactability chain) conforms entirely to the standard and is generally known.

The mobile telephone 4 is either in a shadow area or does not respond, in which case the call is broken and the centre uses response 5 to report to the SCP 11 that contact has not been made. The SCP 11 checks whether connection is being made, according to the control of the contactability chain, to a connection other than the destination connection 10 and gives the SSP a command 6 using the CONNECT operation to connect to the second mobile phone 7. The mobile phone 7 is either in a shadow area or does not respond, in which case the call is broken and the centre uses response 8 to report to the SCP 11 that contact has not been made.

The SCP 11 checks whether the connection is being made, according to the control of the contactability chain, to a connection other than the destination connection 10, detects that this is not so (= it is now the turn of connection to the destination connection 10), and uses the CONNECT operation to command 9 the SSP to connect to the destination connection 10. The SCP 11 sets PBX3 to be the 'A-subscriber class' parameter value of the CONNECT operation 9 routing to the destination connection, without altering anything else in the caller/transferer data received with the original call 1.

The CONNECT operation 9, which routes the call to the destination connection, initiates a new trigger (2^{nd} trigger) 12 in the destination connection 10. All of the call-control data, including the 'A-subscriber class' parameter value (PBX3) altered by the previous CONNECT operation, are transferred in the data of the trigger 12, in accordance with the current INAP standard.

The SCP 11 detects from the 'A-subscriber class' parameter value of the trigger 12 (the A-subscriber class is PBX3 and the A-subscriber number [and the call-transferers as numbers, if the call is a transfer call] is the number (or numbers) recorded at the beginning of the method description), that this specific case concerns a new trigger (2^{nd} trigger) from the destination connection 10, initiated by the CONNECT operation produced by the SCP's call control, and recognizes from this that it is now wished to connect the call to the destination connection 10, and not to begin again the previously described contactability chain control sequence. The SCP 11 gives the SSP the CONTINUE command 13, as a result of which the call is connected to the destination connection 10.

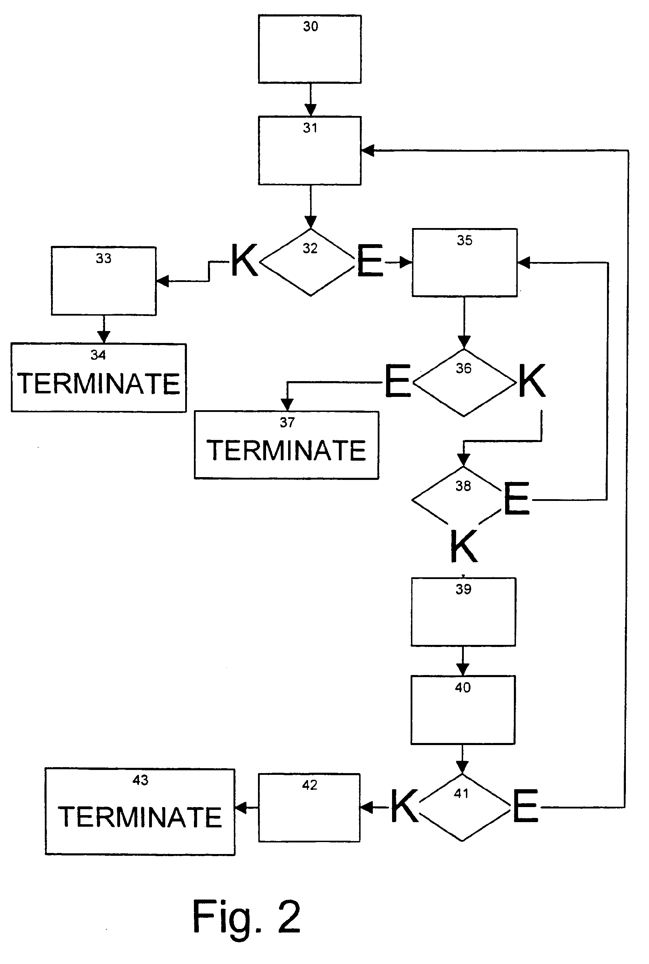

According to Figure 2, a terminating traffic triggering condition 30 is set for the connection, the call is routed 31 to the destination connection, causing an intelligent-network query 32, which enquires whether the call should be routed directly to the destination connection, by means of a CONTINUE command 33, or to a connection other than the destination connection, by means of a CONNECT command 35. In block 36, a check is made whether the contactability chain should continue, and, if not, the routing is terminated at block 37. If the contactability chain continues, for example, due to the call connected in block 35 being broken, another test is made in block 38 to determine whether the following destination is the destination connection or some other connection. If it is not the destination connection, the call is routed forward according to the contactability chain by means of the CONNECT command according to block 35. If the connection is the destination connection, the SCP gives the SSP a command 39 to connect to the destination connection by means of the CONNECT operation. For this CONNECT operation directed to the destination connection, the SCP sets 40 , in a predetermined parameter field, for example, in the 'A-subscriber class' field, a value, such as PBX3 in the case in the example, differing from the normal value. The CONNECT command initiates a new intelligent-network trigger 41, in which case the SCP detects from the set parameter (e.g., A-subscriber class), that this is a case of a second intelligent-network trigger, initiated by the SCP's own call control, which must not reinitiate the operation chain described above, and uses the CONTINUE command in block 42 to connect the call to the destination connection. The service is terminated in block 43.

If it is detected in block 41 that the parameter value (e.g., A-subscriber class) to be used for control is not set to continue operations from block 31, the call in question must then be a new call addressed to the same destination connection, which has arrived at the destination connection precisely during the contactability routing of the previous call.

The new call attempt should then be processed in exactly the same way as described above.

## Claims

1. A method for processing intelligent-network traffic provided with terminating traffic triggering conditions, in which method
- some terminating traffic condition is set for the destination connection (10), in which case, when a call arrives at the connection (10) in question, the switching centre (SSP) performs an intelligent-network query of the intelligent-network control (11),
- as a result of the intelligent-network query, the call is routed to at least one connection (4, 7) differing from the destination connection,
**characterized in that**
- after the connection differing from the destination connection (10), the call is routed back to the destination connection (10), changing in this routing at least one of the parameter settings transmitted in signalling, as a sign of the connection to the destination connection (10),
- as a result of the destination connection's (10) intelligent-network query, which arises as a consequence of the routing performed by the change in the parameter setting, in response to the said change in the parameter setting, the switching centre (SSP) is directed by means of the control (11) of the intelligent network, to connect the call to the destination connection.

2. A method according to Claim 1, **characterized in that**, as a consequence of the intelligent-network query made by the destination connection, the parameter 'A-subscriber class' is altered.

3. A method according to Claim 1 or 2, **characterized in that**, the destination connection's (10) intelligent-network query following the alteration to the parameter setting in response to the said alteration to the parameter setting directs the switching centre (SSP), by means of the intelligent-network control (SCP), to connect the call to the destination connection, using the CONTINUE command.

4. A method according to Claim 1 or 2 or 3, **characterized in that**, after the connection made to the destination connection (10), the intelligent-network control (SCP) is permitted to continue connecting the call to other connections, using the 'A-subscriber class' parameter value, which was set before the routing made to the destination connection by means of the CONTINUE command.

## Patentansprüche

1. Verfahren zur Verarbeitung von Verkehr in einem intelligenten Netz, das mit Auslöserbedingungen für ankommenden Verkehr versehen ist, wobei in dem Verfahren
- irgendeine Bedingung für ankommenden Verkehr für den Zielanschluß (10) festgelegt wird, wobei die Vermittlungsstelle (SSP) in diesem Fall, wenn ein Anruf an dem fraglichen Anschluß (10) ankommt, eine intelligente Netzabfrage der intelligenten Netzsteuerung (11) durchführt,
- der Anruf als ein Ergebnis der intelligenten Netzabfrage zu wenigstens einem Abschluß (4, 7) leitweggelenkt wird, der sich von dem Zielanschluß unterscheidet,
**dadurch gekennzeichnet, daß**
- der Anruf nach dem Anschluß, der sich von dem Zielanschluß (10) unterscheidet, zurück zu dem Zielanschluß (10) leitweggelenkt wird, wobei in dieser Leitweglenkung zumindest eine der in der Signalisierung übertragenen Parametereinstellungen als ein Hinweis auf die Verbindung zu dem Zielanschluß (10) geändert wird,
- die Vermittlungsstelle (SSP) als ein Ergebnis der intelligenten Netzabfrage des Zielanschlusses (10), das sich als eine Folge der Leitweglenkung ergibt, die ansprechend auf die Änderung der Parametereinstellung durch die Änderung der Parametereinstellung durchgeführt wird, mittels der Steuerung (11) des intelligenten Netzes angewiesen wird, den Anruf zu dem Zielanschluß durchzustellen.

2. Verfahren nach Anspruch 1, **dadurch gekennzeichnet, daß** als eine Folge der von dem Zielanschluß durchgeführten intelligenten Netzabfrage der Parameter "A-Teilnehmer-Klasse" verändert wird.

3. Verfahren nach Anspruch 1 oder 2, **dadurch gekennzeichnet, daß** die von dem Zielanschluß (10) durchgeführte intelligente Netzabfrage anschließend an die Veränderung der Parametereinstellung die Vermittlungsstelle (SSP) ansprechend auf die Veränderung der Parametereinstellung mittels der intelligenten Netzsteuerung (SCP) anweist, den Anruf unter Verwendung des CONTINUE-Befehls zu dem Zielanschluß durchzustellen.

4. Verfahren nach Anspruch 1 oder 2 oder 3, **dadurch gekennzeichnet, dass** der intelligenten Netzsteuerung (SCP), nachdem die Verbindung zu dem Zielanschluß (10) hergestellt ist, erlaubt wird, den Anruf unter Verwendung des "A-Teilnehmer-Klasse" -Parameterwerts, der festgelegt wurde, bevor die Leitweglenkung zu dem Zielanschluß mittels des CONTINUE-Befehls durchgeführt wurde, weiterhin an andere Anschlüsse durchzustellen.

## Revendications

1. Procédé de traitement du trafic d'un réseau intelligent ayant des conditions de déclenchement de trafic de destination, dans lequel
- une certaine condition de trafic de destination est définie pour la connexion de destination (10), auquel cas, lorsqu'un appel arrive au niveau de la connexion (10) en question, le centre de commutation (SSP) effectue une interrogation de réseau intelligent de la commande de réseau intelligent (11),
- à la suite de l'interrogation de réseau intelligent, l'appel est routé vers au moins une connexion (4, 7) différente de la connexion de destination,
**caractérisé en ce que**
- après la connexion différente de la connexion de destination (10), l'appel est routé à nouveau vers la connexion de destination (10), en changeant lors de ce routage au moins l'un des paramètres transmis en signalisation, en tant que signe de connexion à la connexion de destination (10),
- à la suite de l'interrogation de réseau intelligent de la connexion de destination (10), qui a lieu à la suite du routage effectué par le changement de paramètres, en réponse audit changement de paramètres, le centre de commutation (SSP) est dirigé à l'aide de la commande (11) du réseau intelligent, afin de connecter l'appel à la connexion de destination.

2. Procédé selon la revendication 1, **caractérisé en ce que**, à la suite de l'interrogation de réseau intelligent effectuée par la connexion de destination, le paramètre « Catégorie d'abonné A » est modifié.

3. Procédé selon la revendication 1 ou 2, **caractérisé en ce que** l'interrogation de réseau intelligent de la connexion de destination (10) suivant la modification du paramètre en réponse à ladite modification du paramètre dirige le centre de commutation (SSP), à l'aide de la commande de réseau intelligent (SCP), afin de connecter l'appel à la connexion de destination, en utilisant la commande CONTINUE.

4. Procédé selon la revendication 1 ou 2 ou 3, **caractérisé en ce que**, après la connexion effectuée avec la connexion de destination (10), la commande de réseau intelligent (SCP) est autorisée à poursuivre la connexion de l'appel à d'autres connexions, en utilisant la valeur du paramètre « catégorie d'abonné A », qui a été définie avant le routage effectué vers la connexion de destination à l'aide de la commande CONTINUE.
